(19) Europäisches Patentamt / European Patent Office / Office européen des brevets

(11) **EP 4 222 477 B1**

(12) **EUROPEAN PATENT SPECIFICATION**

(45) Date of publication and mention
of the grant of the patent:
**18.02.2026 Bulletin 2026/08**

(21) Application number: **21830484.8**

(22) Date of filing: **27.09.2021**

(51) International Patent Classification (IPC):
**G01N 21/17** *(2006.01)*    **G01N 21/85** *(2006.01)*
**G01N 29/24** *(2006.01)*

(52) Cooperative Patent Classification (CPC):
**G01N 21/1702; G01N 21/85; G01N 29/2425;**
G01N 2021/1704; G01N 2021/8578

(86) International application number:
**PCT/HU2021/050053**

(87) International publication number:
**WO 2022/069911 (07.04.2022 Gazette 2022/14)**

(54) **MEASUREMENT DEVICE FOR PHOTOACOUSTIC MEASUREMENT IN A FLOWING MEDIUM**

MESSVORRICHTUNG ZUR PHOTOAKUSTISCHEN MESSUNG IN EINEM STRÖMENDEN MEDIUM

DISPOSITIF DE MESURE POUR MESURE PHOTOACOUSTIQUE DANS UN MILIEU EN ÉCOULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2020 HU 2000322**
**05.11.2020 HU 2000369**

(43) Date of publication of application:
**09.08.2023 Bulletin 2023/32**

(73) Proprietor: **Szegedi Tudományegyetem**
**6720 Szeged (HU)**

(72) Inventors:
• **BOZÓKI, Zoltán**
**6753 Szeged (HU)**
• **SZABÓ, Gábor**
**6722 Szeged (HU)**
• **GULYÁS, Gábor**
**5111 Jászfels szentgyörgy (HU)**

(74) Representative: **Kereszty, Marcell**
**Gödölle, Kékes, Mészaros & Szabo**
**Patent and Trademark Attorneys**
**Keleti Karoly u. 13/b.**
**1024 Budapest (HU)**

(56) References cited:
**US-A1- 2009 229 345**

• **MIKLÓS ANDRÁS ET AL: "Application of acoustic resonators in photoacoustic trace gas analysis and metrology", REVIEW OF SCIENTIFIC INSTRUMENTS, AMERICAN INSTITUTE OF PHYSICS, 2 HUNTINGTON QUADRANGLE, MELVILLE, NY 11747, vol. 72, no. 4, 1 April 2001 (2001-04-01), pages 1937 - 1955, XP012039066, ISSN: 0034-6748, DOI: 10.1063/1.1353198**

**Description**

TECHNICAL FIELD

The invention relates to a measurement device that is adapted for taking photoacoustic measurements in a medium flowing through it.

BACKGROUND ART

In the prior art several different photoacoustic systems are known.

US 2009/0229345 A1 discloses a photoacoustic spectroscopy (PAS) system and detector, wherein the sensing unit comprises at least one cavity resonator, in which cavity resonator a standing pressure wave can be formed. The sensing unit is preferably implemented as a tube with a structural resonance frequency substantially coinciding with the cavity resonance frequency. By way of example, the tube has a cylindrical shape with closed or open ends. The document also discloses that a tube open at both ends can be easily placed into a gas-cell containing a gas to be measured. The detector can be applied for detecting gases in exhaled air, and for monitoring industrial process gases, as well as analysing exhaust gases.

US 7,765,871 B2 discloses a method and system for determining gas concentration using photoacoustic spectroscopy. A photoacoustic cell according to the document comprises a modulatable light source, a resonant acoustic chamber, and a microphone positioned within the chamber. The resonant acoustic chamber can be open or closed, and preferably has a cylindrical shape.

US 2011/0072886 A1 discloses a photoacoustic gas detector and a photoacoustic gas detection method. The detector comprises a laser source, an acoustic resonator, and at least one tuning fork, wherein the tuning fork is positioned along a longitudinal length of the resonator. The resonator can be a cylindrical resonator, and even a resonator that is open at both ends. The technical solution according to the document can be operated up to 1470 °C, so it is also suitable for analysing exhaust gases.

US 8,115,931 B2 discloses a photoacoustic detector for measuring a concentration of fine dust particles in gas that is preferably adapted for measuring a fine dust content of exhaust gases. The detector comprises at least one acoustic sensor and a pulsed light source. The excitation light is directed through the cylindrical acoustic resonator such that it excites the second azimuthal resonance of the resonator. An embodiment of the technical solution according to the document comprises an acoustically open measurement volume. The pipe (by reference numeral 1) being the key component of the detector can be placed directly in an exhaust pipe, wherein the gas containing the dust particles can freely flow through the pipe denoted with the reference numeral 1. However, the detector according to the document is substantially suitable for performing measurements only in a stationary gas or a gas with a low flow velocity, because considerations of flow acoustics are not taken into account for configuring its components being in contact with the flowing gas, so certain elements of the detector generate a significant amount of flow acoustic noise even at relatively low flow velocities, which renders photoacoustic measurements unfeasible at higher flow velocities.

US 8,479,559 B2 discloses a photoacoustic detector comprising a cylindrical acoustic resonator, wherein light is guided essentially perpendicular to the axis of the cylinder such that a second azimuthal resonance of the cylinder is excited. The photoacoustic signal generated in the cylinder is measured by at least two sound pressure sensors, preferably microphones, so differential measurements can also be performed. The resonator is closed with plates with holes or with porous plates, such that a gas to be analysed can flow through the resonator, thereby also implementing a noise-filtering function. According to the document, it is possible to position the microphones at lower-temperature portions of the resonator, such that they do not come into contact with the hotter parts of the resonator being in contact with the gas. In such a case, the acoustic signal is conveyed to the sound pressure sensors through a quarter-wave resonator implemented as a tube. The technical solution according to the document has the disadvantage that in the case of high flow velocities the gas flowing through the noise-filtering holes or through the porous material generates an intense flow acoustic noise which makes it impossible to perform photoacoustic measurements.

US 2017/0038343 A1 discloses a "box-in-box" type of gas sensor. The sensor includes an outer and an inner "box" within the outer one that can have a shape of a rectangular parallelepiped, a cylinder, a sphere, an ellipsoid, a cube, or any other suitable shape. Measurements are performed in the inner portion, where a gas to be measured is introduced either directly or indirectly from the outer portion. The sensor having a "box-in-box" configuration reduces the gas flow, and thus enables more accurate measurements, i.e., it improves the sensitivity of the detector. The detector can be applied for environmental measurements, for example for measuring greenhouse gases or the concentration of ozone, for breath diagnostics, and for gas analysis.

Different types of acoustic resonators are described in Miklós András et al.: "Application of acoustic resonators in photoacoustic trace gas analysis and metrology" (Review of Scientific Instruments, 72:4 (2001)).

An open photoacoustic chamber is disclosed in the article by Zoltán Bozóki et al. entitled "A fully opened photoacoustic resonator based system for fast response gas concentration measurements", (Sensors and Actuators B, 147 (2010) 206-212). As the article discloses, photoacoustic chambers usually have a closed configuration to minimize the energy that can escape from them. If the chamber has an open cylinder (tubular) shape, then the chamber must be acoustically sealed. Acoustic sealing can be implemented for example by applying a laser for exciting a well-selected acoustic mode that has pressure minima at the open ends, and in such a manner the amount of acoustic energy escaping through the ends of the chamber is not too significant. There is no hint in the article towards the possibility of performing measurements in a flowing medium by applying the open chamber, so it also does not include teaching for additional modifications that are necessary for an application in a flowing medium. When the measurement device according to the article is placed in a flowing medium, an intensive noise, especially flow noise occurs that would make it impossible to perform photoacoustic measurements and to evaluate such measurements.

DESCRIPTION OF THE INVENTION

In light of the known technical solutions there is a need for a measurement device that is suited for taking photoacoustic measurements when placed directly in a flowing medium, or when being moved in a medium, has a simple configuration, and has improved signal-to-noise ratio compared to known solutions.

The primary object of the technical solution according to the invention is to provide a measurement device that enables taking photoacoustic measurements in a flowing medium, or in cases when the measurement device and a medium are moving at different speeds.

A further object of the invention is to provide a measurement device that can be applied for performing photoacoustic measurements also in a flow having high (i.e., greater than 1 m/s) flow velocity.

Another object of the invention is to provide a measurement device that is suited for taking direct measurements in the medium to be measured, i.e., without sampling.

It is also one of the objects of the invention to provide a measurement device that has a simple configuration, and is therefore less prone to failure, and also has a favourable signal-to-noise ratio.

The object according to the invention have been achieved by providing the measurement device defined in claim 1. Preferred embodiments of the invention are defined in the dependent claims.

The medium to be measured can flow through conventional photoacoustic chambers (so-called "closed" chambers) only at a very limited velocity (typically lower than 1 m/s), because a high-velocity flow (i.e., a flow with a velocity above 1 m/s) generates an intensity of acoustic noise that makes it impossible to perform and evaluate high-accuracy measurements. In the case of high-velocity flows therefore a portion (partial flow) of the flowing medium is preferably sampled, and the photoacoustic measurement is restricted to this partial flow (extractive, "sampled" measurement).

If the medium to be measured is at rest, then a part of the medium, i.e., a sample of the medium to be measured must somehow be introduced into the closed photoacoustic resonator; for example, by applying a suction utilizing a pump, a portion of the medium is drawn through the photoacoustic measurement device, i.e., the medium to be measured must be sampled also in this case.

Extractive, sampled photoacoustic measurements have a number of disadvantages that will be briefly summarized below.

Firstly, in the case of an extractive (sampled) photoacoustic measurement it is much more difficult to provide the representativity of the measurements than in the case of a non-extractive measurement, primarily because, due to the sampling, it is far from obvious that the concentration of the medium component to be measured is the same in the sampled, side-branch medium flow (partial flow) as in the main-branch concentration thereof. For example, in the case of photoacoustic measurements related to aerosols, it is difficult to ensure the isokinetic nature of the measurements.

Secondly, in order to implement sampling, additional components and system elements (e.g., a sampling unit, a flow controller, a pump, etc.) must be included in the system, which increases the costs, the size (mass and volume), the complexity of the measurement system, and the number and frequency of failures.

Thirdly, the sampling unit may significantly increase the response time of the measurement system, especially in case the flow velocity is much lower in the side branch than in the main branch. In such a case, it may take a lot of time for a quick concentration change in the main branch to reach the detector located in a side branch. In view of the fact that response time is also an important analytical parameter, a sample-based, extractive measurement system is at a disadvantage relative to the measurement device according to the invention as far as response time is concerned.

An advantage of the measurement device according to the invention is that it comprises a photoacoustic resonator that is open at both ends, so the medium to be measured can flow through the measurement device directly, without changing its direction, i.e., it is not necessary to apply a sampling unit. Furthermore, the measurement device can also be applied for measuring mediums that have a non-zero relative velocity compared to the measurement device, i.e., either the medium flows with respect to the measurement device, or the measurement device moves relative to the stationary medium.

The most important advantage of the invention is that, under the above-described flow conditions it is suitable for measuring the physical and chemical properties of one or more component of the medium, even if the relative velocity of the measurement device with respect to the medium is significant, i.e., greater than 5 m/s or even than 10 m/s.

An additional advantage is that by applying the measurement device according to the invention it is possible to perform non-extractive measurements, i.e.,

measurements without sampling, in the case of which it is not necessary to sample the medium to be measured (extractive measurement). This measurement method has the advantage that preferably the entire medium can be subject to measurement, not only a portion of the medium (i.e., a sampled portion, a sample), in which latter case it must be provided that the sample is representative for the entire medium. Applying the measurement device according to the invention, measurements can be performed directly in the medium to be measured, so it is not necessary to apply sampling devices and apparatus, while the measurements can also be carried out much faster. The measurements taken by the measurement device according to the invention therefore eliminate a number of disadvantages of conventional, extractive measurement devices.

A further advantage of the measurement device according to the invention is that it has a more favourable photoacoustic signal-to-noise ratio compared to known solutions. We have recognized that in our efforts to maximize the signal-to-noise ratio it is not preferred to separate signal maximization from minimizing noise, because it occurs often that a given configuration that enhances the photoacoustic signal also increases noise, and vice versa, i.e., by reducing noise the intensity of the photoacoustic signal is also often reduced.

We have recognized that for designing measurements in a flowing medium it is especially important to take into account the flow acoustic aspects of the applicable signal enhancing or noise reduction solutions; it can thereby be prevented that a given signal enhancing or noise reduction solution leads to an increase of flow acoustic noise that - instead of providing an improved signal-to-noise ratio of the photoacoustic measurements - would result in a significant deterioration of the signal-to-noise ratio.

Furthermore, we have also recognized that - due to the characteristics of photoacoustic measurements - maximizing the signal-to-noise ratio need not cover all frequencies, but it is preferably sufficient to maximize the signal-to-noise ratio at the frequency of photoacoustic signal generation/signal detection, and to provide that the signal-to-noise ratio of the measurement is maximized at this frequency or these frequencies or in a narrow band surrounding thereof. Noise, and especially the noise generated by the flow of the medium must preferably be minimized at the frequency of photoacoustic measurements, i.e., in an unconventional manner, noise should be minimized not in general (i.e., in a wide frequency band) but substantially at a single frequency, i.e., the resonance frequency of the photoacoustic resonator that was selected for the photoacoustic measurements. At frequencies other than these, flow acoustic noise can even reach significant levels without deteriorating the signal-to-noise ratio of the photoacoustic measurement.

We have also recognized that overdriving the measurement device must be prevented, even if this overdriving occurs at completely different frequencies than the frequency of the photoacoustic signal detection. This is because due to nonlinear effects overdriving may negatively affect photoacoustic measurements even if it occurs at different frequencies than the frequency of signal detection/signal generation. Overdriving can be mechanical in nature, in which case the microphone sensor undergoes magnitude changes that the response of the sensor to the acoustic changes will no more be proportional to these changes, or electric, in which case the electronics adapted for processing the signal of the measuring microphone is overdriven. The noises that result in overdriving usually occur at low acoustic frequencies (i.e., under a few hundred Hz). One of the reasons behind overdriving may be the noise generated by the flow of the medium, which typically also occurs at low frequencies.

In the measurement device according to the invention, the photoacoustic signal-to-noise ratio is maximized by simultaneously maximizing the photoacoustic signal and minimizing flow noise at the measurement frequency, while overdriving is prevented at all frequencies.

The intensity of acoustic noise depends on the flow velocity and the shape (the degree of streamlining) of the body placed in the flow, so the acoustic noises generated by the flowing medium can be eliminated or reduced by streamlining the measurement device. In the case of photoacoustic measurements performed in a low-velocity flow, the noise generated by the flow is negligible relative to the inherent noise of the measurement, which for example can result from the inherent noise of the microphone. By gradually increasing the flow velocity from zero, a flow velocity threshold value can be found at which flow noise equals the inherent noise of the measurements. With flow velocities above the threshold value, flow acoustic noise increases very fast (its dependence on flow velocity can be typically described with a high-exponent power function, such as $x^6$), as a result of which the signal-to-noise ratio of the measurements deteriorates quickly, and the measurement system becomes incapable of taking meaningful photoacoustic measurements. Due to its favourable configuration, by increasing the threshold value of the flow velocity the measurement device according to the invention is capable of performing photoacoustic measurements at any flow velocity that occurs in the medium to be measured.

It is a known feature of photoacoustic measurements that the noises entering the photoacoustic resonator can be reduced with the help of holes and cavities formed around the photoacoustic resonator. The disadvantage of these solutions is that - although they can reduce acoustic noise - they generate a significant amount of flow acoustic noise, which leads to an overall increase of noise. In the measurement device, the high pass acoustic filter is not positioned in the flow path, so the above-described detrimental effects do not occur.

In the course of photoacoustic measurement, it is also customary to apply acoustic filters, primarily for providing noise reduction at the frequency of the photoacoustic measurements. The most frequently applied filters are λ/4 (quarter-wave) filters, because utilizing such filters a significant noise reduction can be achieved at and near a given frequency. Such filters have to be optimized for or tuned to the measurement frequency of the photoacoustic system, and have to be positioned around the photoacoustic resonator such that the medium to be measured can flow through them. This solution can only be applied in the case of low flow velocities, otherwise the medium flowing through the λ/4 filter generates a significant amount of flow acoustic noise, which reduces the range of velocities applicable in the course of the measurements.

We have also recognized that it is possible to configure the measurement device in such a manner that enables the efficient filtering of low frequency noises, thereby also ensuring that low-frequency overdriving is prevented. We have also recognized that a high pass filter that is adapted to filter out low-frequency noise components can be formed in a holder body adapted to retain the photoacoustic resonator. Furthermore, we have also recognized that the filter is preferred not to be arranged upstream of the photoacoustic, but between the photoacoustic resonator and the microphone. Thereby, with appropriate dimensioning, the filter attenuates the photoacoustic signal only to a negligible extent, while it significantly reduces the noises generated by the flow.

BRIEF DESCRIPTION OF THE DRAWINGS

Preferred embodiments of the invention are described below by way of example with reference to the following drawings, where

Figs. 1A and 1B are perspective views of a preferred embodiment of the measurement device according to the invention,
Fig. 1C is a front elevation view of the measurement device according to Fig. 1A,
Fig. 1D is a side elevation view of the measurement device according to Fig. 1A,
Fig. 2A is a perspective view of another preferred embodiment of the measurement device according to the invention,
Fig. 2B is a sectional view of the measurement device according to Fig. 2A taken along the line A-A,
Fig. 2C is a perspective view of the measurement device according to Fig. 2A,
Fig. 3A is a front elevation view of yet another preferred embodiment of the measurement device according to the invention,
Fig. 3B is a sectional view of the measurement device according to Fig. 3A taken along the line A-A,
Fig. 3C is a magnified view of detail C of the measurement device according to Fig. 3A,
Fig. 3D is a perspective view of the measurement device according to Fig. 3A,
Fig. 3E is a side elevation view of the measurement device according to Fig. 3A,
Fig. 4A is a longitudinal view of a holder body having a streamlined configuration in a preferred embodiment of the measurement device according to the invention,
Fig. 4B is a front elevation view of the holder body according to Fig. 4A,
Fig. 4C is a cross-sectional view of the holder body according to Fig. 4A,
Fig. 5A is a schematic drawing illustrating the dimensioning of a microphone duct and a pressure balancing duct of the measurement device according to the invention,
Fig. 5B is a schematic drawing illustrating the dimensioning of a microphone duct and three pressure balancing ducts of the measurement device according to the invention,
Fig. 6 shows a frequency dependence of a measured noise measured by a measurement device according to the invention comprising a pressure balancing duct, and by a measurement device without a pressure balancing duct,
Fig. 7 is an illustration of the measurement arrangement applied for the measurements according to Fig. 6 with a measurement device according to Fig. 3B,
Fig. 8A is a front elevation view of an embodiment of the measurement device according to the invention that has a non-streamlined configuration,
Fig. 8B is a sectional view of the measurement device according to Fig. 8A taken along the line A-A,
Fig. 8C is a top plan view of the measurement device according to Fig. 8A,
Fig. 8D is a side elevation view of the measurement device according to Fig. 8A,
Fig. 9 illustrates a variation of a noise that can be measured in a measurement frequency range as a function of a flow velocity of the medium, measured with the non-streamlined and streamlined measurement devices according to Fig. 8A and Fig. 3A, respectively, and
Fig. 10 is a schematic drawing illustrating an internal configuration of a microphone applied in a preferred embodiment of the measurement device.

In the figures, components with the same or similar functions are denoted by the same reference numerals; however, their exact implementation may vary for example across different embodiments.

MODES FOR CARRYING OUT THE INVENTION

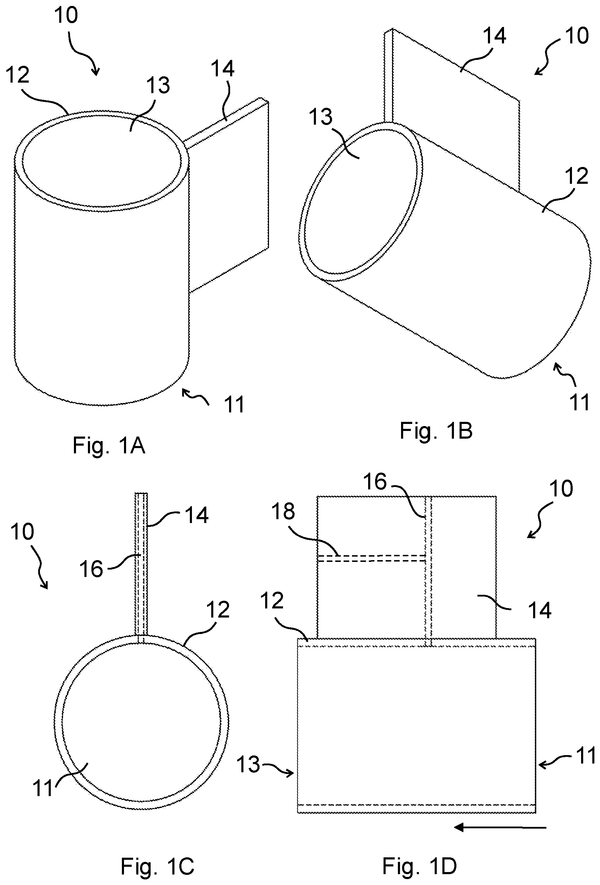

Figs. 1A-1D illustrate a configuration of a preferred embodiment of a measurement device 10 according to the invention in various views. Preferably, the measurement device 10 is a part of a photoacoustic measurement system that also comprises at least one light source, preferably for example one or more lasers, as well as measurement control and signal processing electronics.

The measurement device 10 comprises a tubular-shaped photoacoustic resonator 12 that has an inlet aperture 11 and an outlet aperture 13 adapted, respectively, for introducing a medium to be measured into the measurement device 10 and for discharging it therefrom. The inlet aperture 11 and the outlet aperture 13 are located at both ends of the photoacoustic resonator 12, wherein the inlet aperture 11 and the outlet aperture 13 both have an open configuration, preferably one that is open along an entire cross-section of the photoacoustic resonator 12 (i.e., it is an open photoacoustic resonator). Further, the photoacoustic resonator 12 defines an internal space that is located between the inlet aperture 11 and the outlet aperture 13, and that is suitable for creating a photoacoustic effect therein. The medium to be measured flows through the internal space of the photoacoustic resonator 12 under the effect of the flow of the medium to be measured or under the effect of the movement of the measurement device 10 relative to the medium to be measured. The phrasing "the medium flows through" will hereinafter be used to refer to the relative movement of the medium and the measurement device 10.

Photoacoustic measurements are preferably directed at measuring at least one component of a medium to be measured, i.e., at determining the concentration of a given component of the medium. One or more light sources are required for performing the photoacoustic measurements; the radiation of the light source(s) is absorbed to some extent by the component of the medium. Light absorption typically occurs at specific wavelengths, so it is preferred to apply lasers as a light source, wherein a wavelength of the laser corresponds to an absorption wavelength of the component of the medium that is to be measured. Due to absorption, the given component of the medium is brought into an excited state, which is followed by a relaxation phase, during which heat is produced. By applying a periodic excitation (i.e., under an effect of a modulated-intensity excitation light) a periodic pressure difference is generated in the internal space of the photoacoustic resonator 12, which periodic pressure difference can be detected as a sound wave (photoacoustic signal).

For detecting the photoacoustic signal generated in the photoacoustic resonator 12 (in the internal space thereof) by the photoacoustic effect, the measurement device 10 comprises a microphone 26.

For producing a photoacoustic effect and generating a photoacoustic signal, the excitation light must be introduced into the internal space of the photoacoustic resonator 12 to illuminate said internal space. The photoacoustic resonator 12 has multiple resonance modes that are essentially standing waves. Each resonance mode has an eigen-frequency and can be characterised with a specific pressure distribution, i.e., the internal space of the photoacoustic resonator 12 has parts where the pressure difference caused by the photoacoustic excitation has a maximum, and also has parts where the pressure difference is zero or essentially zero. The location dependence of the pressure variation in the internal space of the photoacoustic resonator 12 is a function of a transmission (i.e., a transmission direction) of the excitation light; a modulation frequency and the transmission direction of the excitation light have to be chosen corresponding to a desired acoustic resonance. The frequency of the modulation of the light signal is preferably identical to the eigen-frequency of one of the acoustic resonance modes of the photoacoustic resonator 12, or is derived from the eigen-frequency (for example, it is an integer multiple of the eigen-frequency). Photoacoustic measurements are typically performed at frequencies in the 8-17 kHz frequency range.

By choosing the right (preferred) excitation parameters, the generated photoacoustic signal can be maximized; however, in an opposite case the intensity of the photoacoustic signal can also be zero or near zero. The one or more microphones 26 adapted for detecting the photoacoustic signal are preferably arranged at the locations of the maxima of the amplitude of pressure in the measurement device 10.

The photoacoustic resonator 12 preferably has a cylindrical configuration, more preferably a cylindrical configuration having a circular cross-section, but the photoacoustic resonator 12 may also have different cross-sectional shapes, for example polygonal (triangular, rectangular, pentagonal, hexagonal, etc.) cross-sectional shapes, which cross-sectional shapes preferably comprise rounded-off corners in order to reduce flow noises. Preferably, the cross-sectional shape of the photoacoustic resonator 12 does not have corners, because if the medium to be measured flows through the photoacoustic resonator 12, sharp corners would generate significant flow and acoustic noises, which negatively affects the quality and signal-to-noise ratio of the photoacoustic signal, and could even make measurements impossible.

In order to reduce flow noises, the photoacoustic resonator 12 has a rounded-off configuration also at the rims of the inlet aperture 11 and of the outlet aperture 13. The rounded-off portions preferably have a configuration that reduces the flow acoustic noise generated at the rims, but does not increase the acoustic losses of the excited resonance, i.e., that does not reduce the losses (Q factor) of the resonance, for example by increasing the amount of energy emitted (radiated out) from the photoacoustic resonator 12.

The axial length of the photoacoustic resonator 12 is preferably 10-200 mm, more preferably 20-100 mm; the length of the photoacoustic resonator 12 is preferably determined in accordance with the mode to be generated in the photoacoustic resonator 12. To provide the mechanical stability of the photoacoustic resonator 12 and to provide that it can withstand pressure waves, a wall thickness of the photoacoustic resonator 12 is preferably chosen to be as high as possible; however, considerations related to flow acoustics call for a lower, uniform, or uniformly varying wall thickness is desirable. In accordance with these considerations, a wall thickness of the photoacoustic resonator 12 is preferably 0.5-10 mm, more preferably 1-5 mm. An outer diameter of a cylindrical photoacoustic resonator 12 is preferably 10-100 mm, more preferably 20-60 mm. The photoacoustic resonator 12 is preferably made from a material, for example a metal, that provides sufficient rigidity, such that mechanical oscillations of the material of the photoacoustic resonator 12 can be prevented from occurring during the photoacoustic measurements.

For performing photoacoustic measurements, the photoacoustic resonator 12 must be fixed in the medium to be measured; for measurements taken in a flowing medium the photoacoustic resonator 12 must preferably be kept in a fixed position, while for measurements performed in a static medium the photoacoustic resonator 12 must preferably be attached to a moving device, which moving device moves the photoacoustic resonator 12 in a predetermined manner, for example at a constant velocity and along a given straight line, which movement makes the medium to be measured flow through the photoacoustic resonator 12.

The measurement device 10 according to the invention is suitable for taking photoacoustic measurements in a flowing medium, even in a medium with a high flow velocity. Due to the open configuration of the photoacoustic resonator 12, the medium to be measured can be made to flow through the photoacoustic resonator 12, i.e., the medium to be measured preferably enters the internal space of the photoacoustic resonator 12 through the inlet aperture 11, and leaves it through the outlet aperture 13. The configuration of the measurement device 10 allows that the medium to be measured does not need to be sampled for measurements.

In contrast to the disadvantages of the extractive, sample-based photoacoustic measurements addressed in the introduction, the measurement device 10 has a much simpler configuration, is cheaper, more reliable, and is laden with sampling errors to a much smaller extent. Moreover, as there is no need of sampling, the response time of the measurements taken with the measurement device 10 according to the invention is also typically much shorter, and thus it is possible to detect rapid concentration changes in the medium to be measured by utilizing the measurement device 10 according to the invention.

An important advantage of the measurement device 10 according to the invention is that, due to the elimination of the sampling, the photoacoustic measurements taken by the measurement device 10 are more representative than the measurements performed by applying conventional measurement devices detectors. The representativity of the photoacoustic measurements means that the concentration of the component of the medium to be measured is, to a good approximation, the same in the detector (in our case, in the measurement device 10, especially in the photoacoustic resonator 12 thereof) and in the entire medium to be measured.

The issue of the representativity of the measurements arises most often in the case of measuring such components of the medium that have a significantly greater characteristic dimension that the characteristic dimension of other components making up the medium to be measured. Such a case occurs for example when there are so-called aerosol particles in a gas as the medium to be measured. The characteristic dimension of the components of the gas (typically, molecules) is usually smaller than 1 nm, while aerosol particles can even have a size on the scale of micrometres. In the case of photoacoustic measurements aimed at determining the concentration of aerosols, a so-called isokinetic measurement condition is usually maintained to ensure the representativity of the measurements. A measurement is isokinetic (or is not far from an isokinetic state) if the flow velocity is the same (is equal) in the medium to be measured and in the detector (for example, in the measurement device 10). The uniformity of flow velocity is important not only for measuring aerosols but also for measuring gas components in gases. Therefore, the photoacoustic measurement device 10 must be configured in a way that the measurement device 10 substantially does not affect the flow velocity, while efforts should also be made to ensure the spatial uniformity of the flow velocity. The representativity of the measurements can thus be improved.

According to what was set forth above, the measurement device 10 allows that the medium to be measured can be made to flow directly through the photoacoustic resonator 12. The medium to be measured can be made to flow through the photoacoustic resonator 12 in various ways. By way of example, in case the medium to be measured flows through a pipe or a system of pipes, then the measurement device 10 can be directly attached to the pipe or pipe system (provided that the diameter and cross-sectional area of the pipe and the photoacoustic resonator 12 are identical), while on the other hand the photoacoustic resonator 12 can be put directly into the flow and can be held therein at a predetermined measurement position by applying one or more holder bodies 14.

The measurement device 10 can also applied for measuring a non-flowing medium. In such a case, the measurement device 10 is typically installed on a moving device that moves in the medium to be measured. The measurement device 10 is preferably attached to the moving device via the holder body 14, or alternatively a flow duct is formed in the moving device, and the measurement device 10 is installed in the duct such that the medium to be measured flows directly through the measurement device 10.

By way of example, the invention can be applied for performing measurements in exhaust gases of vehicles, in pipelines and chimneys, and for atmospheric measurements, preferably by applying a measurement device 10 installed on a moving device (e.g., a motor vehicle, a drone, an airplane, a balloon, a rocket, etc.). The measurement device 10 is suitable for measuring various components of the medium to be measured, for example for measuring various aerosols and gases.

The photoacoustic resonator 12 is retained in a stable manner in a position required for performing a measurement, i.e., in the flowing medium, or attached to the moving device adapted to move the photoacoustic resonator 12, by one or more holder bodies 14. In the latter case, photoacoustic measurements are performed in a static medium, wherein the relative motion between the medium to be measured and the photoacoustic resonator 12 is a result of the movement of the photoacoustic resonator 12. The holder body 14 is attached to the photoacoustic resonator 12 externally such that it does not affect the flow conditions of the internal space.

The configuration of the holder body 14 is crucial for photoacoustic measurements. This is because if a holder body 14 of unsuitable configuration was applied, the measurement device 10 could only be applicable for taking measurements in a medium (e.g., gas) with very low flow velocity (i.e., essentially in a stationary medium). If, for example, the holder body 14 is implemented as a circular rod, then the rod generates a significant amount of acoustic noise even at low flow velocities, which noise would make it much more difficult to evaluate the photoacoustic measurements. Therefore, the holder body 14 according to the invention preferably has a streamlined (flattened) configuration that retains the photoacoustic resonator 12 in a spoke-like manner, for example, in the case of a cylindrical photoacoustic resonator 12, preferably in a radial direction. The holder body 14 has a configuration, preferably a streamlined configuration, that generates only a low amount of flow acoustic noise during measurements taken in a flowing medium. Furthermore, the configuration of the holder body 14 allows the inclusion of additional components required for the operation of the measurement device 10, which additional components thus preferably generate only very low flow acoustic noise or no flow acoustic noise at all.

Preferably, there are no sharp points or edges at or near the location where the photoacoustic resonator 12 and the holder body 14 are joined together, i.e., the holder body 14 is attached to the photoacoustic resonator 12 in a rounded-off manner; it is for example preferable if the transition between the holder body 14 and the photoacoustic resonator 12 can be described with a second-order continuous function. The photoacoustic resonator 12 and the holder body 14 are preferably made integrally, as a single piece, for example by cutting or machining, whereby the sharp edges that are formed at the joints between the photoacoustic resonator 12 and the holder body 14, affecting or hindering photoacoustic measurements, can be eliminated.

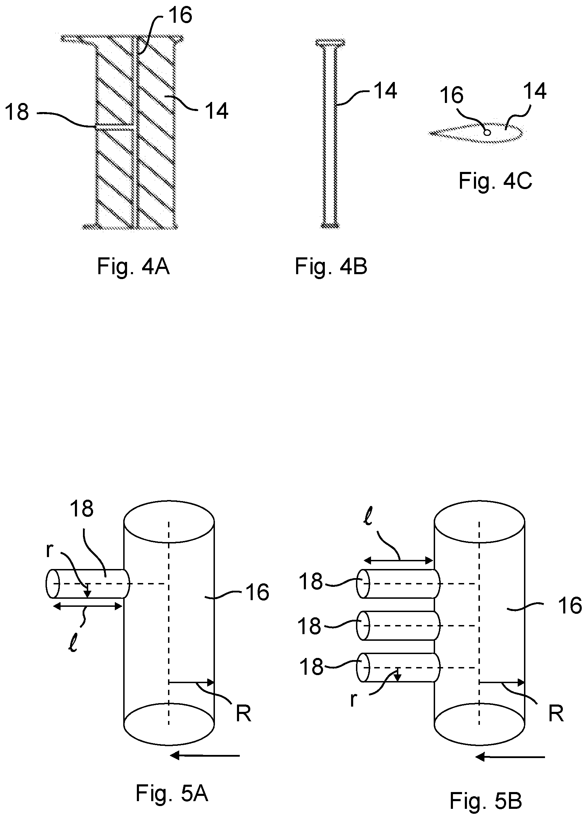

The holder body 14 preferably has a wing profile (airfoil) cross-sectional shape (see Fig. 4C), more preferably it is configured to correspond to the NACA00XX airfoil shape function.

The length of the holder body 14, measured along the axis of the photoacoustic resonator 12, preferably does not exceed the length of the photoacoustic resonator 12; the length of the holder body 14 is preferably 10-200 mm, more preferably 20-100 mm.

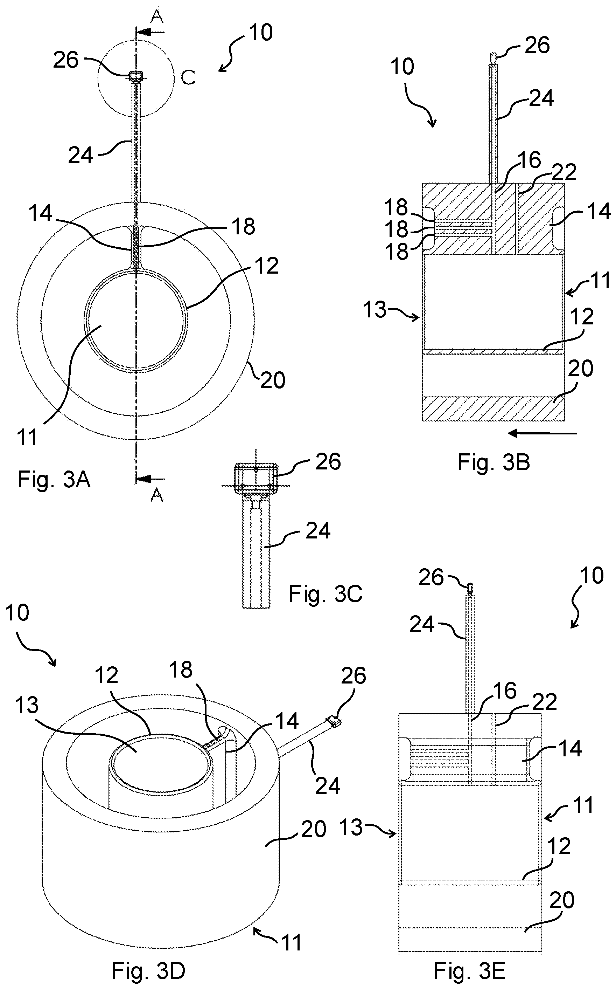

A microphone duct 16 and a pressure balancing duct 18 are formed in the holder body 14 of the measurement device 10 according to the invention. Optionally, other ducts and passages can also be formed in the holder body 14, by way of example, additional pressure balancing ducts 18, microphone ducts 16, and a light duct 22 (see the preferred embodiment according to Figs. 3A-3E). The light duct 22 allows the introduction of an excitation light, for example a laser light required for photoacoustic measurements, into the photoacoustic resonator 12. However, the excitation light can also be introduced into the photoacoustic resonator 12 in other ways, for example parallel to the axis of the photoacoustic resonator 12. Excitation light introduced into the internal space of the photoacoustic resonator 12 from different directions can preferably be applied for exciting different photoacoustic modes.

The microphone duct 16 is adapted for conveying the photoacoustic signal (the sound waves generated by the photoacoustic effect) from the internal space of the photoacoustic resonator 12 to the microphone 26 (see Figs. 3A-3E). By arranging the microphone duct 16 in the holder body 14, the maximum flow rate at which the measurement device 10 can be utilized for photoacoustic measurements can be increased. This is because the configuration of the measurement device 10 according to the invention makes it unnecessary to direct the photoacoustic signal to the microphone 26 in a way and along a path that would affect the flow of the medium to be measured and would deteriorate the signal-to-noise ratio of the measurement, so the photoacoustic measurement can be performed even at higher flow velocities that cause higher noise levels. On the other hand, arranging a streamlined (flattened) holder body 14 enables the application of the pressure balancing duct 18 that is of fundamental importance for reducing low-frequency noises (which are partly flow noises).

In order to reduce flow acoustic noises, the design of the microphone duct 16 should consider that there should be as few edges, protrusions, or cavities at the end of the microphone duct 16 connecting to the photoacoustic resonator 12 as possible, because such features typically cause a significant amount of flow acoustic noise.

It is true for each element of the measurement device 10 that the acoustic noise generated inside or around a given element by the flowing medium can be significantly reduced by a proper flow acoustic optimization (streamlining) of the given element. In addition to minimizing the flow acoustic noise, in the course of streamlining the mechanical stability and functionality of the given element should also be considered and maintained. For example, the photoacoustic resonator 12 is dimensioned in a way that it is capable of performing photoacoustic measurements (for generating a desired mode), that it has sufficiently thick walls to provide mechanical stability during the measurement, that no mechanical waves are generated in the material of the photoacoustic resonator 12 under the effect of the acoustic waves and/or the vortices that can sometimes be produced by flow, and that it has a sufficiently small size and a streamlined, rounded shape such that it generates as low level of a flow acoustic noise as possible. Likewise, the holder body 14 is dimensioned in a way that it can include the microphone duct 16 and the one or more pressure balancing ducts 18, and, optionally, to include an additional light duct 22 while it also has a sufficient thickness for maintaining the mechanical stability, but is also sufficiently streamlined and thin for generating as low level of a flow acoustic noise as possible.

An important component of the measurement device 10 according to the invention is the pressure balancing duct 18, which pressure balancing duct 18 is open at both of its ends. One end of the pressure balancing duct 18 is connected to the microphone duct 16, the other end thereof is located closer to the outlet aperture 13 than the microphone duct 16, wherein the second end is in contact with the medium to be measured.

We have recognized that the microphone duct 16 and the pressure balancing duct 18 configured according to the invention collectively form a high pass acoustic filter by which the object of the invention can be fulfilled. By applying the configuration of the microphone duct 16 and the pressure balancing duct 18 according to the invention, low-frequency acoustic noises can be dampened, while the occurrence of a low-frequency overdrive of the microphone 26 may also be reduced, even to zero, i.e., such events can be completely eliminated. Thus, the measurement device 10 can be used for taking measurements also in such cases wherein the external noises (having a frequency of typically under 3 kHz), one or more low-frequency components (i.e. components with frequencies lower than the typical measurement frequency of 8-17 kHz of photoacoustic measurements), or noises generated by the flow of the medium to be measured are so high that there is a danger that the photoacoustic system will be overdriven, which overdrive is of such an extent that it cannot be filtered out by using customarily applied digital signal processing techniques. In the measurement device 10 according to the invention, the high pass acoustic filter formed by the microphone duct 16 and the pressure balancing duct 18 reduces low-frequency noises, and thus widens the range of applicability of the measurement device 10, i.e., by using the measurement device 10 it is possible to perform photoacoustic measurements under noisier conditions and at higher flow velocities that generate greater noise. At the typical measurement frequencies, the high pass acoustic filter of the measurement device 10 according to the invention formed by the microphone duct 16 and the pressure balancing duct 18 reduces the photoacoustic signal only to a negligible extent.

One of the advantages of the pressure balancing duct 18 configured according to the invention is that it does not generate flow acoustic noise because it is not in a direct contact with the medium to be measured (the medium to be measured does not flow into the pressure balancing duct 18), while another advantage is that, in cooperation with the microphone duct 16, it reduces only low-frequency noise while having a negligible effect at the measurement frequency, so it increases the signal-to-noise ratio of the photoacoustic signal. The bores and holes that are often included in prior art technical solutions usually modify the transfer function of the photoacoustic resonator, so they either generate a flow noise when the measurement device 10 is placed in a flowing medium or reduce both the noise and the useful signal, or they even generate both problems at once. The pressure balancing duct 18 according to the invention, however, does not affect the transfer function of the photoacoustic resonator 12, but only the transmission between the photoacoustic resonator 12 and the microphone 26, interacting with the medium to be measured only to a minimal extent, so it does not generate flow acoustic noise either.

According to our observations, in the case of photoacoustic measurements in a flowing medium such a degree of noise reduction cannot be achieved solely by modifying the shape of the holder body 14 (i.e., by streamlining it) that would ensure that the microphone 26 is not overdriven even at flow velocities above 10 m/s. In our experience, overdrive events occur in an acoustic frequency range that is much lower than the frequency of the photoacoustic measurement, so they can be eliminated by using the high pass acoustic filter constituted by the microphone duct 16 and the pressure balancing duct 18.

Thanks to the high pass acoustic filter formed by the microphone duct 16 and the pressure balancing duct 18, the measurement device 10 according to the invention can be applied in case of high flow velocities, for example flow velocities greater than 5 m/s or even greater than 10 m/s.

The following aspects should be considered for dimensioning the high-pass filter:

- The diameter of the microphone duct 16 must be as small as possible, because as the diameter increases, the Q factor of the resonance of the photoacoustic resonator 12 deteriorates further and further due to the microphone duct 16, i.e., the intensity of the photoacoustic signal is reduced. Due to the large diameter of the microphone duct 16, a serious amount of flow noise may be generated at the end of the microphone duct 16 that faces the photoacoustic resonator 12.

- The length of the pressure balancing duct 18 is limited by the dimensions of the holder body 14, i.e., the pressure balancing duct 18 must fit inside the holder body 14.

- The size (thickness) of the holder body 14 is also an important consideration for choosing the diameter of the pressure balancing duct 18. Applying a holder body 14 with larger physical dimensions is disadvantageous from the aspect of flow acoustics, because it increases the amount of flow acoustic noise generated by the holder body 14.

- Also considering the above-mentioned aspects, the geometric parameters of the high pass filter should be determined in a way that, under the given flow noise conditions, the cutoff frequency of the high pass filter is best suited for filtering out flow noise causing overdrive, while it affects (attenuates) the photoacoustic signal to the smallest extent possible at the measurement frequency.

Other details related to the dimensioning of the high pass filter are discussed in relation to Figs. 5A-5B.

The filter configured according to the considerations described above is capable of reducing the noises causing overdrive during the measurements, while the high pass filter itself does not generate any flow acoustic noise, does not deteriorate the flow acoustic characteristics of the measurement device 10, and reduces the intensity of the photoacoustic signal only by a minimal extent.

Noise reduction can be further improved by applying additional pressure balancing ducts formed in the holder body 14 (see Fig. 5B and its description).

In the measurement device 10, it is not preferred to arrange the microphone 26 (adapted for measuring the photoacoustic signal) directly in the photoacoustic resonator 12 for a number of reasons. For example, in measurements performed in a high-temperature medium or with a heated photoacoustic resonator 12, high temperature may damage the microphone 26, or in case the medium to be measured can contain contaminants (e.g., soot), which contaminants may accumulate on the microphone 26 that could also lead to the failure of the microphone 26. It is therefore preferred to space the microphone 26 apart from the photoacoustic resonator 12. The photoacoustic signal is passed out from the photoacoustic resonator 12 and to the microphone 26 through the microphone duct 16, the microphone duct 16 being formed in the holder body 14. By increasing the distance between the microphone 26 and the photoacoustic resonator 12, the microphone 26 becomes less exposed to potentially occurring high temperatures. Furthermore, thanks to the microphone duct 16, the microphone 26 also does not come into contact with the medium to be measured, so the danger that the microphone 26 gets dirty or damaged is reduced.

Compared to prior art technical solutions, the measurement device 10 according to the invention has a better signal-to-noise ratio, which is achieved by the measurement device 10 by increasing the intensity of the photoacoustic signal and decreasing the noise generated by the flow. The primary contributors to noise reduction are the microphone duct 16 and pressure balancing duct 18 formed in the holder body 14, while secondarily the configuration of the holder body 14 also contributes to reducing the noise.

The microphone duct 16, the pressure balancing duct 18, and the light duct 22 preferably have a straight, bore-like configuration, preferably with a diameter between 0.5 and 5 mm, more preferably between 1 and 2 mm. The microphone duct 16, the pressure balancing duct 18, and the light duct 22 may be configured to have identical or different diameters.

The measurement device 10 according to the invention is also suitable for performing so-called differential measurements. For performing differential measurements, the measurement device 10 comprises at least two microphones 26, or at least one differential microphone 26. The two microphones 26 adapted for taking differential measurements are arranged in the photoacoustic resonator 12 such that the photoacoustic signals detected by the microphones 26 have different amplitude and/or phase. For example, one of the microphones 26 detects a high photoacoustic signal intensity, while the other microphone 26 detects a much lower-intensity signal. For example, the two microphones 26 are arranged connected to two holder bodies 14 that are arranged in a configuration wherein they lie at an angle of 90° or 180° with respect to each other.

For example, a mixed azimuthal-longitudinal mode is generated in the photoacoustic resonator 12, and the microphones 26 are placed in such a manner that, when detecting the mode, the two microphones 26 measure photoacoustic signals with the same amplitude but opposite phase. If the signals of the two microphones 26 are processed by using a differential microphone amplifier, then the useful photoacoustic signal is partly or entirely retained (or is even amplified), while components of external noise that reach both microphones 26 with an identical phase are reduced (cancelled) as a result of the differential measurement. Thus, the signal-to-noise ratio of the photoacoustic measurement is improved. Differential measurement is primarily suitable for suppressing noise propagating in the medium to be measured.

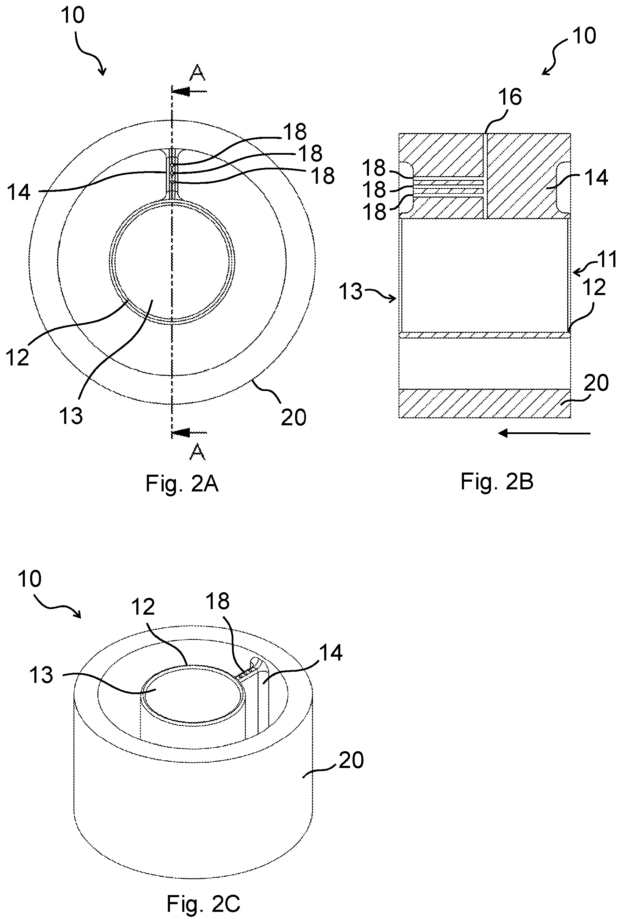

Figs. 2A-2C illustrate a configuration of a further preferred embodiment of the measurement device 10 according to the invention in various views, which, in addition to the elements of the preferred embodiment according to Figs. 1A-1D, also includes an outer body 20 and a total of three pressure balancing ducts 18. Other elements of the measurement device 10 and their features are identical to those described above in relation to Figs. 1A-1D.

Like the photoacoustic resonator 12, the outer body 20 also has a tubular shape, and is also open at both of its ends. It preferably contributes to suppressing external noises affecting the measurement device 10, and also to the mechanical stability of the measurement device 10. In this embodiment, the holder body 14 adapted for retaining the photoacoustic resonator 12 is connected to the outer body 20, and at the locations of the connection it has a rounded, streamlined shape that does not have any sharp corners. The cross-sectional shape of the outer body 20 is preferably identical to the cross-sectional shape of the photoacoustic resonator 12; the outer body 20 preferably has a cylindrical configuration.

Expediently, the outer body 20 can be made integral with the photoacoustic resonator 12 and the holder body 14, thereby eliminating the sharp edges formed at the joints between the elements that could generate flow noise.

In this embodiment, the measurement device 10 can also be retained during photoacoustic measurements by applying the outer body 20. If the medium to be measured is adapted to flow through a pipe, then the inner or outer diameter of the outer body 20 is preferably chosen to correspond to the size of the pipe such that the measurement device 10 can be easily fixed to the pipe by using the outer body 20, and the photoacoustic measurement can be carried out easily, under stable conditions.

Preferably, the outer body 20 also has a streamlined configuration, i.e., it does not comprise sharp corners or edges, and has rounded-off rims at its open ends. The photoacoustic resonator 12 can preferably be attached to the outer body 20 by applying even more than one holder bodies 14, wherein additional microphone ducts 16, one or more pressure balancing ducts 18, and a light duct 22 can be formed in each additional holder body 14.

The photoacoustic resonator 12 and the outer body 20 are configured to be open at both ends, preferably to be open across their entire cross section. This also contributes to reducing the flow resistance of the measurement device 10, and thus the flow path of the medium to be measured does not go around the photoacoustic resonator 12 but advances through it. This solution ensures the representativity of the photoacoustic measurements and allows performing measurements without sampling.

In order to reduce the flow resistance of the measurement device 10, the diameter of the photoacoustic resonator 12 and the ratio between the diameter of the photoacoustic resonator 12 and its axial length should be sufficiently great. In case these values are smaller than a given threshold value, then the photoacoustic resonator 12 may have significant flow resistance.

The flow resistance of the measurement device 10 can also increase if the holder body (bodies) 14 fill up the space between the photoacoustic resonator 12 and the outer body 20 to a too great extent, or if the photoacoustic resonator 12 and the outer body 20 are located too close to each other.

In the measurement device 10 according to the invention, the length of the outer body 20 is preferably the same as the length of the photoacoustic resonator 12. The measurement device 10 can of course can be implemented by applying an outer body 20 having a length that is smaller or greater than the length of the photoacoustic resonator 12. In the case of a cylindrical configuration, its diameter is preferably greater, preferably by at least 10 mm, than the diameter of the photoacoustic resonator 12; i.e., the diameter of the outer body 20 is preferably 50-300 mm, more preferably 60-200 mm, most preferably 80-100 mm. The thickness of the outer body 20 is preferably 1-50 mm, more preferably 10-30 mm.

In the preferred embodiment according to Figs. 3A-3E, the measurement device 10 comprises further optional elements compared to the preferred embodiment according to Figs. 2A-2C. The configuration, function and features of structural components denoted with the same reference numerals are identical to what was set forth above in relation to Figs. 2A-2C.

As can be seen in Fig. 3B, in the holder body 14 are one or more light ducts 22 formed that are adapted for introducing excitation light into the photoacoustic resonator 12 in a manner described above in relation to Figs. 1A-1D. Forming the light duct 22 in the holder body 14 is preferable because it eliminates the need for applying additional structural elements for introducing excitation light into the device, which additional elements could potentially affect the flow of the medium to be measured and could also generate flow acoustic noise. The light duct 22 according to Fig. 3B is preferably applied primarily in case it is more preferable to introduce excitation light, for example laser light, into the internal space of the photoacoustic resonator 12 through a cylindrical surface of the photoacoustic resonator 12 than to introduce excitation light into the internal space of the photoacoustic resonator 12 through the inlet aperture 11 or outlet aperture 13 of the photoacoustic resonator 12.

The preferred embodiment according to Figs. 3A-3E further comprises a riser tube 24 that is adapted for increasing the distance between the microphone 26 and the photoacoustic resonator 12 and thus for reducing the thermal connection between the photoacoustic resonator 12 and the microphone 26 (in accordance with what was discussed above in relation to Figs. 1A-1D), such that the microphone 26 is less exposed to the potentially harmful effects of the medium to be measured (e.g. high temperature or contaminants). Preferably, one end of the riser tube 24 is fitted into the microphone duct 16, wherein the microphone 26 is disposed at its other end.

Fig. 4A-4C illustrate the details of a preferred embodiment of the holder body 14; Fig. 4A showing a longitudinal section of the holder body 14, Fig. 4B showing a front elevation view of the holder body 14, and Fig.

4C showing a cross-section of the holder body 14. As it can be seen in Figs.4A-4C, the holder body 14 has a streamlined configuration. It can be observed in Fig. 4C that the cross-section of the holder body 14 has a streamlined airfoil shape. The axial dimension of the holder body 14 measured along the axis of the photoacoustic resonator 12, which preferably coincides with the direction of flow of the medium to be measured, is preferably greater than its dimension measured in a direction perpendicular to it. Preferably, in the section of Fig. 4C the dimension of the holder body 14 measured along the axis of the photoacoustic resonator 12 is at least three times greater than its dimension measured in a direction perpendicular to it.

The holder body 14 according to Figs. 4A-4C comprises a microphone duct 16 and a pressure balancing duct 18 that preferably have a diameter of 0.5-5 mm, more preferably of 1-3 mm. Similar to with Figs. 3A-3E, the holder body 14 according to Figs. 4A-4C can also comprise additional ducts, for example one or more pressure balancing ducts 18, and also a light duct 22.

The greatest dimension of the holder body 14 is preferably a height indicated in Figs. 4A and 4B, which is preferably 1-200 mm, more preferably 10-100 mm. In order to further reduce the flow noises, the holder body 14 is connected to the photoacoustic resonator 12 with rounded-off edges; the roundings at the locations of connections (places of joints) preferably having a radius of curvature of 0.5-5 mm, more preferably of a radius of curvature of 1-3 mm. The width of the holder body 14 according to Fig. 4B is expediently 1-10 mm, preferably 1-5 mm, more preferably 2-3 mm.

The features explained in relation to the holder bodies 14 according to Figs. 1A-1D, Figs. 2A-2D, and Figs. 3A-3E are also present in the holder body 14 having the preferred configuration according to Figs. 4A-4C.

Figs. 5A and 5B illustrate considerations related to the dimensioning of the microphone duct 16 and the pressure balancing duct 18 formed in the holder body 14. In the course of photoacoustic measurements, it is preferable to suppress low-frequency noises in such a manner that does not cause an intensity reduction of the photoacoustic signal, i.e., in this way the signal-to-noise ratio of the photoacoustic signal is significantly improved. We have recognized that, in case the microphone duct 16 formed in the holder body 14 is complemented with a pressure balancing duct 18 that is connected to the former and is also formed in the holder body 14, then, provided with appropriate dimensioning, the microphone duct 16 and the pressure balancing duct 18 collectively constitute a high pass acoustic filter that is favourable from the aspect of reducing the low-frequency noise of the measurements, while it affects the useful photoacoustic signal at most to a minimal extent.

As is known from literature (see for example E. Kinsler et al.: Fundamentals of Acoustics, Fourth Edition, 10.11 Acoustic filters (b) High-Pass Filter), applying two hollow tubes arranged in a T-shape a high pass acoustic filter can be produced, i.e., a filter that suppresses low-frequency components (in the case of the present invention, typically noises), while letting through high-frequency components (in the case of the present invention, typically the photoacoustic signal). The cutoff frequency (f), under which the filter suppresses the signal and above which it lets it through, can be calculated based on the lengths and radii of the hollow tubes as follows:

$$f = \frac{cr^2}{2R^2\pi l},$$

wherein

c is the speed of sound in the medium to be measured,

f is the cutoff frequency,

r is the radius of one of the hollow tubes, i.e., in this case the pressure balancing duct 18,

R is the radius of the other hollow tube, i.e., in this case the microphone duct 16,

$\ell$ is the length of the pressure balancing duct 18.

One of the open ends of the pressure balancing duct 18 formed in the holder body 14 is connected to the microphone duct 16, while the other end thereof is located closer to the outlet aperture 13 than the microphone duct 16. This configuration of the pressure balancing duct 18 prevents the medium to be measured from directly entering the pressure balancing duct 18 and thus prevents it from generating a flow acoustic noise.

In Fig. 5A the flow direction - in which direction the medium to be measured flows through the photoacoustic resonator 12 - is indicated by an arrow. In the illustrative example according to the figure, the upper portion of the microphone duct 16 is open towards the microphone 26, while the bottom portion thereof is open towards the photoacoustic resonator 12. One end of the pressure balancing duct 18 is open towards the microphone duct 16 and is connected thereto perpendicularly, while its other end is open towards the medium to be measured lying outside the photoacoustic resonator 12. In the exemplary embodiment according to Fig. 5A, the pressure balancing duct 18 is formed parallel to the flow direction shown in the figure.

In case the pressure balancing duct 18 has a given length $\ell$ - which is limited for example by the length of the photoacoustic resonator 12 - the ratio of the radius of the pressure balancing duct 18 and the radius of the microphone duct 16 can be calculated as follows:

$$\frac{r}{R} = \sqrt{\frac{2\pi l f}{c}},$$

wherein the denotations are identical to those introduced above.

Preferably, the microphone duct 16 and the pressure balancing duct 18 are both configured to have a circular cross-section in the high pass filter constituted by the microphone duct 16 and the pressure balancing duct 18, but other configurations can also be applied, for example, the microphone duct 16 and the pressure balancing duct 18 can have a polygonal cross-sectional shape, a polygonal cross-section with rounded corners, an oval cross-sectional shape, etc., while the configuration of the microphone duct 16 and the pressure balancing duct 18 can be identical or different. Both the microphone duct 16 and the pressure balancing duct 18 are preferably implemented as straight bores, but a curved configuration can also be applied.

The advantage of applying a circular cross-section microphone duct 16 and pressure balancing duct 18 (implemented as a straight bore) is that, in comparison with other configurations, the circular cross-section shapes cause lower acoustic losses, signal attenuation, and that they can be formed more easily, i.e., can be machined by using simple mechanisms (e.g., a drill).

The end of the microphone duct 16 connected to the photoacoustic resonator 12 can preferably have a special streamlined shape, which ensures that the microphone duct 16 generates as little flow acoustic noise as possible. For similar reasons, the end of the microphone duct 16 connected to the photoacoustic resonator 12 can also have a bell-like, widening shape.

For dimensioning the high pass acoustic filter constituted by the microphone duct 16 and the pressure balancing duct 18, it is also preferred to take into account the following additional considerations:

- Cutoff frequency (f): The elements of the high pass acoustic filter are preferably dimensioned in a way that the cutoff frequency f is in the kHz range, typically 1-6 kHz. By choosing the cutoff frequency in this manner it can be ensured that, on the one hand, the cutoff frequency f is much lower than the modulation frequency of the photoacoustic signal - which typically is in the 10 kHz range (usually approximately 8-17 kHz), i.e., that the intensity of the useful signal is not reduced due to the application of the high pass filter, and, on the other hand, that the cutoff frequency is high enough for suppressing (damping) a high amount of low-frequency noise.

- The radius (R) of the microphone duct 16: Increasing the radius R of the microphone duct 16 is limited by the size of the holder body 14, in which holder body 14 the microphone duct 16 is located. In order that the holder body 14 generates as low flow acoustic noise as possible, the holder body 14 preferably has a thin, flat configuration (see Figs. 4B and 4C), so a microphone duct 16 having a large radius R cannot be formed therein. Furthermore, it is preferred to set the radius R of the microphone duct 16 to a low value because, on the one hand, a high amount of acoustic energy could escape from the photoacoustic resonator 12 through a microphone duct 16 having a large-size diameter R, deteriorating the Q factor of the excited acoustic mode and reducing the intensity of the photoacoustic signal, and, on the other hand, increasing the value of the diameter R would increase the flow noise generated at the rim of the microphone duct 16 at the place where the microphone duct 16 is connected to the photoacoustic resonator 12. However, it is also not preferred to set the radius R of the microphone duct 16 too low, because the friction losses could significantly reduce the amplitude of the photoacoustic signal in the course of the propagation of the photoacoustic signal from the photoacoustic resonator 12 to the microphone 26 along the microphone duct 16. Based on these considerations and also on our experiments, the radius R of the microphone duct 16 is preferably chosen to be in the range of 0.5-1.5 mm.

- The length (L) of the microphone duct 16: The length L of the microphone duct 16 does not affect the cutoff frequency f, so this parameter is not relevant from the aspect of dimensioning the high pass filter. It should be noted that in case the length L of the microphone duct 16 is set high, i.e., for example it is greater than the radius of the outer body 20, then the microphone 26 is raised from the outer body 20, for example by applying a riser tube 24. This configuration has the advantage that it further reduces the danger of overheating the microphone 26 by keeping the microphone 26 even further from the medium to be measured, which can be a high-temperature gas, or from the heated photoacoustic resonator 12.

- The length (ℓ) of the pressure balancing duct 18: The length ℓ of the pressure balancing duct 18 is substantially determined by the geometrical configuration of the measurement device 10, provided that the length of the holder body 14 as measured along the axis of the photoacoustic resonator 12, and the position of the microphone duct 16 along this length of the holder body 14 are given.

- The radius (r) of the pressure balancing duct 18: The value of the radius r of the pressure balancing duct 18 is limited by the fact that the holder body 14 (wherein the pressure balancing bore 18 is formed) is usually thin, i.e., a pressure balancing bore 18 with a large radius r cannot be formed therein. A further consideration for determining the radius of the pressure balancing bore 18 is that the cutoff frequency f can be tuned into the desired range, for example the range of 1-6 kHz, primarily by adjusting this parameter. In contrast to the radius R of the microphone duct 16, the value of the radius r of the pressure balancing duct 18 is substantially unaffected by flow acoustic considerations, because the flow velocity is typically low at the ends of the pressure balancing duct 18 that are in contact with the medium to be measured, so a significant amount of flow acoustic noise is not generated there. Based on the considerations summarized above, the value of the radius r of the pressure balancing duct 18 is preferably set between 0.5 and 1.5 mm.

Preferably, more than one pressure balancing ducts 18 can be formed in a single holder body 14; in Fig. 5B a preferred arrangement is shown wherein three pressure balancing ducts 18 are connected to the same microphone duct 16. We have recognized that with each additional pressure balancing duct 18 connected to the microphone duct 16 it is possible to further increase a low-frequency noise suppression; applying three bores was found particularly preferable. The pressure balancing ducts 18 are preferably identical, and are placed uniformly, i.e., at an even distance from each other, along the microphone duct 16. The pressure balancing ducts 18 preferably run parallel to each other, which improves their preferable noise-reducing effect.

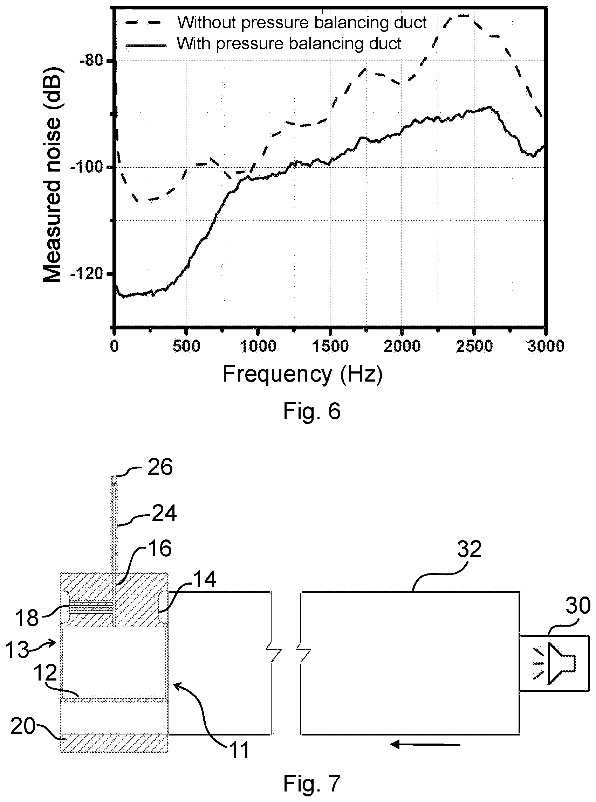

The favourable effects of the application of the pressure balancing duct 18 on photoacoustic measurements have also been tested experimentally. In Fig. 6, the measured noise values are shown as a function of a frequency, i.e., the figure shows the transfer curves of the microphone 26 of the measurement device 10 for measurements taken by using measurement devices 10 with a pressure balancing duct 18 and without a pressure balancing duct 18; the measuring arrangement is schematically illustrated in Fig. 7.

The effects of the pressure balancing ducts 18 arranged in the holder body 14 were analysed in relation to the sensitivity of the measurement device 10 to external sound sources. In the course of the tests, the measurement device 10 was excited by using a noise source 30, which noise source 30 was applied for generating white noise via a speaker and a signal generator. The intensity of the noise source 30 was set to fell in the middle of the dynamic range of the microphone 26 of the measurement device 10. The distance of the noise source 30 and the measurement device 10 was approximately 1 metre, which was approximately ten times the length of the measurement device 10 applied in the given measurement.

In the measurement arrangement according to Fig. 7, the measurement device 10 was placed relative to the noise source 30 such that the pressure balancing ducts 18 were arranged at a side of the measurement device 10 facing away from the noise source 30. The advantage of this arrangement is that the medium does not flow through the pressure balancing ducts 18, which reduces the noise generated by the flow and its disturbance effects on the measurement.

The measurement device 10 and the noise source 30 were connected by a tube 32, wherein the arrangement of the tube 32 was identical to the arrangement applied in the course of real photoacoustic measurements performed, for example, in a flowing medium. In the course of the measurement, the signal measured by the microphone 26 was recorded by applying a 30-second time window. A Fourier-transform of the recorded signal could be regarded as the measured transfer function of the measurement device 10.

For measurements without pressure balancing ducts 18 the pressure balancing ducts 18 were sealed off with sealing pins having a tight fit; the measurements taken with such a measurement device 10 were considered as measurements without pressure balancing ducts 18 as shown in Fig. 6. After removing the sealing pins, the measurement was repeated with an open pressure balancing duct 18 (see the arrangement according to Fig. 7); data from this measurement can also be seen in Fig. 6.

As it can be clearly seen in Fig. 6, by applying the pressure balancing duct 18 a significant noise reduction could be achieved; noise levels remain at all frequencies below the values measured during the measurement without a pressure balancing duct 18, while in the measurement with a pressure balancing duct 18 a drastic reduction of noise level can be observed under 900 Hz, which corresponds to the effect of the high pass filter constituted by the pressure balancing duct 18 and the microphone duct 16. In the measurements according to Fig. 6, the dimensions of the pressure balancing ducts 18 were chosen such that they cause only a minimal attenuation at the operating/measurement frequency of the photoacoustic resonator 12, while at the same time noises were suppressed to as great an extent as possible.

The transfer function of the pressure balancing ducts 18 can be determined from the two types of measurement as the difference of the transfer functions obtained for the two types of measurement device 10.

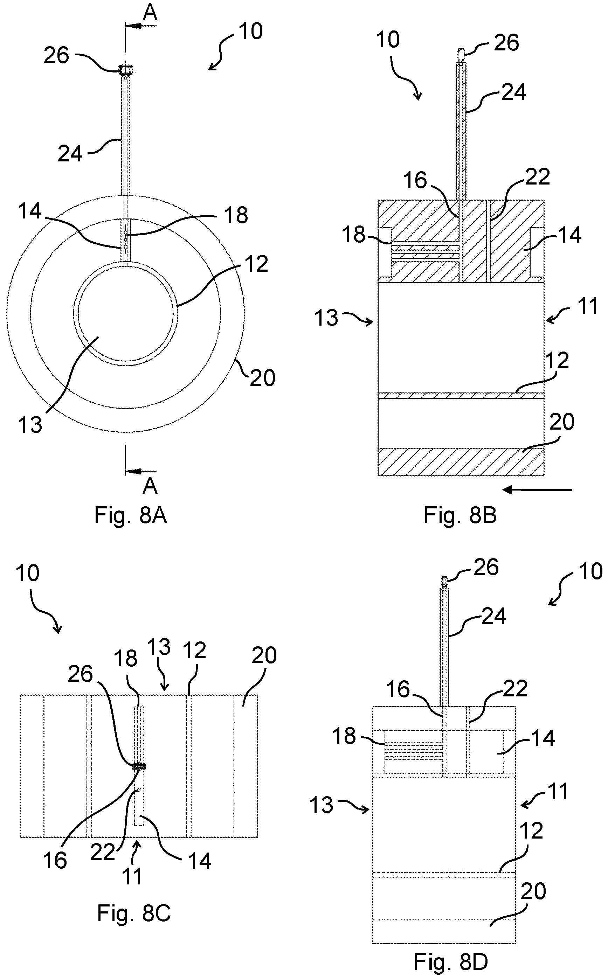

Figs. 8A-8D illustrate a configuration of a non-streamlined measurement device 10. The configuration of this non-streamlined measurement device 10 is basically identical to the configuration of the measurement device 10 illustrated in Figs. 3A-3E, the primary difference being the different configuration of the holder body 14. As it can be well observed in Fig. 8B, the places of joint of the holder body 14 to the photoacoustic resonator 12 and to the outer body 20 are not rounded off, and the cross-section of the holder body 14 as seen in the top plan view of Fig. 8C is also not streamlined, i.e., it is not like an airfoil but has a simple rectangular shape with sharp corners.

A further difference from the measurement device 10 illustrated in Figs. 3A-3E is that other components of the measurement device 10 according to Figs. 8A-8D, for example the photoacoustic resonator 12 and the outer body 20 also do not possess rounded edges or an otherwise streamlined configuration.

The measurement device 10 configured according to Figs. 8A-8D is also capable of performing photoacoustic measurements, but due to the non-streamlined configuration a greater amount of acoustic noise is generated in the measurement device 10, especially at the non-rounded, sharp edges and corners, which significantly deteriorates the signal-to-noise ratio of the photoacoustic measurement.

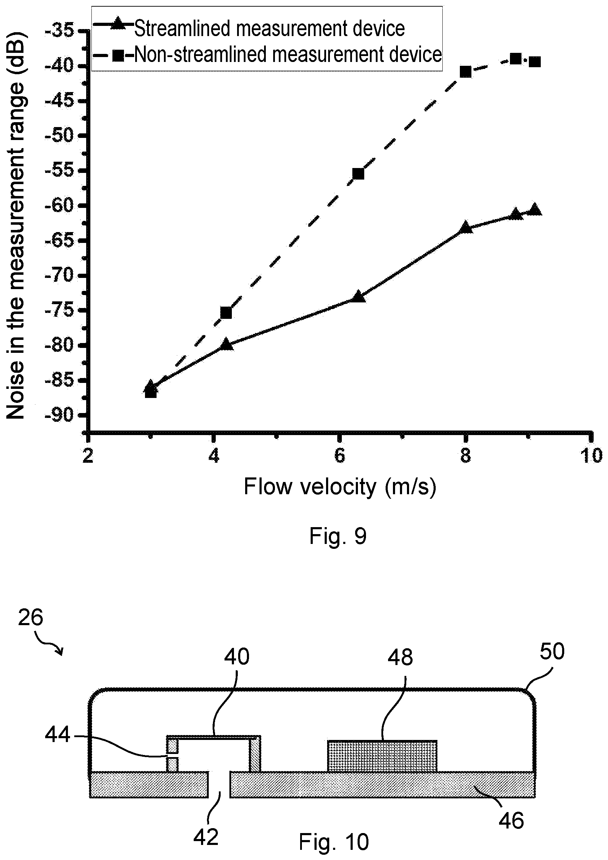

The difference between the photoacoustic measurements taken by the streamlined measurement device 10 according to Figs. 3A-3E and by the non-streamlined measurement device 10 according to Figs. 8A-8D is illustrated in Fig. 9. The measurements according to Fig. 9 were also performed by applying the measurement arrangement according to Fig. 7; Fig. 7 illustrates the arrangement related to the streamlined measurement device 10 according to 3A-3E.

Noise was measured with both the streamlined and the non-streamlined measurement devices 10 in the relevant frequency range of photoacoustic measurements, and then the results were compared. As can be seen in Fig. 9, in the range of significant flows (i.e., above flow velocities of approximately 5 m/s) the noise generated in the course of measurements taken with the streamlined measurement device 10 is at least by an order of magnitude smaller than the noise in the measurements performed by applying the non-streamlined measurement device 10.

Due to its low noise levels, the streamlined measurement device 10 allows the application of any type of microphone 26 for photoacoustic measurements, i.e., it is not required to use a special microphone 26, for example, one that has low sensitivity at low frequencies) in the measurement device 10; noise suppression, especially low-frequency noise suppression is provided by the streamlined configuration of the measurement device 10, and the high pass acoustic filter constituted by the microphone duct 16 and the pressure balancing duct 18. In the case of a non-streamlined measurement device 10, in order to improve the signal-to-noise ratio of the photoacoustic signal, and to enable a simpler evaluation of the measurements, it is preferred to use a special microphone 26 that is insensitive at low frequencies. The internal configuration of such a special microphone 26 is illustrated in Fig. 10.

For high-sensitivity photoacoustic measurements it is preferred to apply high-sensitivity microphones 26. From a sensitivity point of view, commercially available microphones 26 fulfil the requirements, so the measurement device 10 can basically be implemented by applying any commercially available microphone 26; however, high-sensitivity microphones 26 have the disadvantage that they are highly sensitive also at low frequencies. According to what was set forth above, in photoacoustic measurements the low-frequency noise components typically have very high intensity, for example due to the presence of a low-frequency noise source, or due to the acoustic noises generated by the flow of the medium; it is therefore not preferable to apply microphones 26 that are also highly sensitive to low frequencies. It is more preferred to apply such (a) microphone(s) 26 that have a reduced sensitivity at low frequencies.

One possibility is to apply a microphone 26 in the measurement device 10 that has a reduced sensitivity at low frequencies (e.g., a special microphone 26 manufactured by using MEMS technology), while another possibility is modifying a wide-frequency range microphone 26 such that it has a reduced sensitivity at low frequencies. A possible way of carrying out this modification is by modifying, for example, by increasing the diameter of a so-called pressure balancing passage 44 formed inside the microphone 26, and/or forming one or more appropriately dimensioned pressure balancing passages 44 inside the microphone 26. For dimensioning the pressure balancing passage 44, the considerations related to the dimensioning of the pressure balancing duct 18 mentioned in relation to Figs. 5A and 5B can be analogously applied here. The diameter of the pressure balancing passage 44 is preferably chosen such that the reduction in sensitivity does not affect the frequency range that is preferable from the aspect of photoacoustic measurements, i.e., that sensitivity is reduced only in the frequency range that is dominated by noises.

If a microphone 26 that is only sensitive in a narrow frequency band is applied in the measurement device 10, then it has to be ensured - for example when the type or the sensitive range of the microphone 26 is chosen - that the detection band and the measurement frequency range overlap each other.

The microphone 26 is connected to the photoacoustic resonator 12 or to the outer body 20 directly, or preferably through a riser tube 24 with a length of 0-200 mm. The location of the microphone 26 from the internal space of the photoacoustic resonator 12 is primarily not determined by the acoustic properties of the measurement device 10 (because the acoustic properties are substantially uniform along the above-mentioned length range) but preferably by the thermal conditions of the measurement device 10 and the photoacoustic measurement. The higher the temperature of the medium to be measured, and the more sensitive the microphone 26 applied in the measurement device 10 to high temperatures, the greater the distance at which the microphone 26 is preferably placed from the internal space of the photoacoustic resonator 12 (and from the medium to be measured). In the case of a heat-sensitive microphone 26 and a high-temperature medium to be measured, it is preferred to apply a longer riser tube 24, and also to place the microphone 26 preferably at the end of the riser tube 24 lying further from the photoacoustic resonator 12.

Fig. 10 illustrates a preferred internal configuration of a microphone 26 that is insensitive at low frequencies. The microphone 26 according to the figure is a MEMS microphone that comprises an internal pressure balancing passage 44 that - if dimensioned properly - makes the microphone 26 insensitive to low-frequency acoustic waves. The considerations related to the dimensioning of the pressure balancing passage 44 were discussed above.

The microphone 26 comprises an external housing, an opening 42 formed in the external housing, wherein the opening 42 is coupled to the microphone duct 16 of the measurement device 10. The external housing of the microphone 26 is constituted by a base board 46 and a housing 50. The microphone 26 further comprises a sensor space that is extending inside the external housing and is connected to the opening 42, wherein the sensor space is partially delimited by a microphone diaphragm 40. The sensor space is interconnected with the remainder of the internal space of the microphone 26 by a pressure balancing passage 44. The microphone 26 further comprises a control unit 48 adapted for controlling the microphone 26; the control unit 48 is preferably arranged on the base board 46 of the microphone 26.

The microphone 26 according to Fig. 10, as well as further special microphones 26, should be installed in the measurement device 10 in the same way as normal microphones 26.

The manner of industrial application of the invention follows from the characteristics of the technical solution described above. As can be seen from the above, the invention fulfils its objects in a very preferable manner compared to the prior art. The invention is, of course, not limited to the preferred embodiments described in detail above, but further variants, modifications and developments are possible within the scope of protection as defined by the appended claims.

List of reference signs

| 10 | measurement device |
|----|----|
| 12 | photoacoustic resonator |
| 14 | holder body |
| 16 | microphone duct |
| 18 | pressure balancing duct |
| 20 | outer body |
| 22 | light duct |
| 24 | riser tube |
| 26 | microphone |
| 30 | noise source |
| 32 | tube |
| 40 | microphone diaphragm |
| 42 | opening |
| 44 | pressure balancing passage |
| 46 | base board |
| 48 | control unit |
| 50 | housing |

**Claims**

1. A measurement device (10) for photoacoustic measurement in a flowing medium, the measurement device (10) comprising

    - a tubular shaped photoacoustic resonator (12) comprising an inlet aperture (11), an outlet aperture (13) and an internal space defined between the inlet aperture (11) and the outlet aperture (13), and
    - a microphone (26) adapted for sensing a photoacoustic signal generated in the photoacoustic resonator (12),

    **characterised by** further comprising

    - a holder body (14) attached from the outside to the photoacoustic resonator (12),
    - a microphone duct (16) adapted for conveying the photoacoustic signal from the internal space of the photoacoustic resonator (12) to the microphone (26), wherein the microphone duct (16) is formed in the holder body (14), and
    - a pressure balancing duct (18) having two open ends and formed in the holder body (14), wherein one of its ends is connected to the microphone duct (16), and its other end is for being in contact with the medium to be measured and is located closer to the outlet aperture (13) than the microphone duct (16).

2. The measurement device (10) according to claim 1, **characterised in that** a riser tube (24) is attached to the holder body (14) as an extension of the microphone duct (16), and the microphone (26) is arranged at an end of the riser tube (24) lying further from the photoacoustic resonator (12).

3. The measurement device (10) according to claim 1 or 2, **characterised in that** a light duct (22) adapted for introducing excitation light into the internal space of the photoacoustic resonator (12) is arranged in the holder body (14).

4. The measurement device (10) according to any of claims 1-3, **characterised in that** the holder body (14) has a streamlined configuration comprising rounded edges.

5. The measurement device (10) according to any of claims 1-4, **characterised in that** three pressure balancing ducts (18) are connected to the microphone duct (16), wherein the pressure balancing ducts (18) are arranged parallel to each other in the holder body (14).

6. The measurement device (10) according to any of claims 1-5, **characterised in that** it is configured for taking differential photoacoustic measurements and comprises two holder bodies (14), each of which comprising a respective microphone duct (16) and at least one pressure balancing duct (18), wherein a respective microphone (26) is connected to each microphone duct (16).

7. The measurement device (10) according to claim 6, **characterised in that** the two holder bodies (14) are arranged in a configuration having an angle of 90° or 180° with respect to each other.

8. The measurement device (10) according to any of claims 1-7, **characterised in that**

   - the photoacoustic resonator (12) is implemented as a cylinder open at both ends, to which the holder body (14) is attached in a radial direction,
   - the microphone duct (16) is arranged radially in the holder body (14), and
   - the pressure balancing duct (18) is arranged perpendicular to the microphone duct (16).

9. The measurement device (10) according to any of claims 1-8, **characterised in that** the microphone (26) comprises

   - an external housing,
   - an opening (42) formed in the external housing and connected to the microphone duct (16),
   - a sensor space located inside the external housing and connected to the opening (42), wherein the sensor space is partially delimited by a microphone diaphragm (40), and
   - a pressure balancing passage (44) adapted for interconnecting the sensor space with a remainder of the internal space of the microphone (26).

**Patentansprüche**

1. Messvorrichtung (10) zur photoakustischen Messung in einem strömenden Medium, wobei die Messvorrichtung (10) aufweist

   - einen röhrenförmigen photoakustischen Resonator (12) mit einer Einlassöffnung (11), einer Auslassöffnung (13) und einem zwischen der Einlassöffnung (11) und der Auslassöffnung (13) definierten Innenraum, und
   - ein Mikrofon (26) zum Erfassen eines in dem photoakustischen Resonator (12) erzeugten photoakustischen Signals,

   **dadurch gekennzeichnet, dass** sie ferner umfasst

   - einen Haltekörper (14), der von außen an dem photoakustischen Resonator (12) angebracht ist,
   - einen Mikrofonkanal (16), der dazu ausgelegt ist, das photoakustische Signal aus dem Innenraum des photoakustischen Resonators (12) zu dem Mikrofon (26) zu leiten, wobei der Mikrofonkanal (16) in dem Haltekörper (14) ausgebildet ist, und
   - einen Druckausgleichskanal (18) mit zwei offenen Enden, der in dem Haltekörper (14) ausgebildet ist, wobei eines seiner Enden mit dem Mikrofonkanal (16) verbunden ist und sein anderes Ende dazu bestimmt ist, mit dem zu messenden Medium in Kontakt zu stehen, und näher an der Auslassöffnung (13) angeordnet ist als der Mikrofonkanal (16).

2. Messvorrichtung (10) nach Anspruch 1, **dadurch gekennzeichnet, dass** ein Steigrohr (24) als Verlängerung des Mikrofonkanals (16) an dem Haltekörper (14) angebracht ist und das Mikrofon (26) an einem von dem photoakustischen Resonator (12) weiter entfernten Ende des Steigrohrs (24) angeordnet ist.

3. Messvorrichtung (10) nach Anspruch 1 oder 2, **dadurch gekennzeichnet, dass** in dem Haltekörper (14) ein Lichtkanal (22) angeordnet ist, der zum Einleiten von Anregungslicht in den Innenraum des photoakustischen Resonators (12) ausgelegt ist.

4. Messvorrichtung (10) nach einem der Ansprüche 1 bis 3, **dadurch gekennzeichnet, dass** der Haltekörper (14) einen stromlinienförmigen Aufbau mit abgerundeten Kanten aufweist.

5. Messvorrichtung (10) nach einem der Ansprüche 1 bis 4, **dadurch gekennzeichnet, dass** drei Druckausgleichskanäle (18) mit dem Mikrofonkanal (16) verbunden sind, wobei die Druckausgleichskanäle (18) parallel zueinander in dem Haltekörper (14) angeordnet sind.

6. Messvorrichtung (10) nach einem der Ansprüche 1 bis 5, **dadurch gekennzeichnet, dass** sie für die Durchführung von differentiellen photoakustischen Messungen ausgebildet ist und zwei Haltekörper (14) aufweist, von denen jeder einen entsprechenden Mikrofonkanal (16) und mindestens einen Druckausgleichskanal (18) aufweist, wobei ein entsprechendes Mikrofon (26) mit jedem Mikrofonkanal (16) verbunden ist.

7. Messvorrichtung (10) nach Anspruch 6, **dadurch gekennzeichnet, dass** die beiden Haltekörper (14) in einer Anordnung mit einem Winkel von 90° oder 180° zueinander angeordnet sind.

**8.** Messvorrichtung (10) nach einem der Ansprüche 1 bis 7, **dadurch gekennzeichnet, dass**

- der photoakustische Resonator (12) als an beiden Enden offener Zylinder ausgebildet ist, an dem der Haltekörper (14) in radialer Richtung befestigt ist,
- der Mikrofonkanal (16) radial in dem Haltekörper (14) angeordnet ist und
- der Druckausgleichskanal (18) senkrecht zu dem Mikrofonkanal (16) angeordnet ist.

**9.** Messvorrichtung (10) nach einem der Ansprüche 1 bis 8, **dadurch gekennzeichnet, dass** das Mikrofon (26) aufweist

- ein Außengehäuse,
- eine in dem Außengehäuse ausgebildete und mit dem Mikrofonkanal (16) verbundene Öffnung (42),
- einen innerhalb des Außengehäuses angeordneten und mit der Öffnung (42) verbundenen Sensorraum, wobei der Sensorraum teilweise durch eine Mikrofonmembran (40) begrenzt ist, und
- einen Druckausgleichskanal (44), der dazu ausgelegt ist, den Sensorraum mit einem Rest des Innenraums des Mikrofons (26) zu verbinden.

## Revendications

**1.** Dispositif de mesure (10) pour une mesure photoacoustique dans un milieu fluide, le dispositif de mesure (10) comprenant

- un résonateur photoacoustique (12) de forme tubulaire comprenant une ouverture d'entrée (11), une ouverture de sortie (13) et un espace interne défini entre l'ouverture d'entrée (11) et l'ouverture de sortie (13), et
- un microphone (26) adapté pour détecter un signal photoacoustique généré dans le résonateur photoacoustique (12),

**caractérisé en ce qu'**il comprend en outre

- un corps de support (14) fixé de l'extérieur au résonateur photoacoustique (12).
- un conduit de microphone (16) adapté pour transporter le signal photoacoustique de l'espace interne du résonateur photoacoustique (12) au microphone (26), dans lequel le conduit de microphone (16) est formé dans le corps de support (14), et
- un conduit d'équilibrage de pression (18) présentant deux extrémités ouvertes et formé dans le corps de support (14), dans lequel l'une de ses extrémités est connectée au conduit de microphone (16), et son autre extrémité est destinée à être en contact avec le milieu à mesurer et est située plus près de l'ouverture de sortie (13) que le conduit de microphone (16).

**2.** Dispositif de mesure (10) selon la revendication 1, **caractérisé en ce qu'**un tube montant (24) est fixé au corps de support (14) en prolongement du conduit de microphone (16), et le microphone (26) est agencé à une extrémité du tube montant (24) située plus loin du résonateur photoacoustique (12).

**3.** Dispositif de mesure (10) selon la revendication 1 ou 2, **caractérisé en ce qu'**un conduit de lumière (22) adapté pour introduire de la lumière d'excitation dans l'espace interne du résonateur photoacoustique (12) est agencé dans le corps de support (14).

**4.** Dispositif de mesure (10) selon l'une des revendications 1-3, **caractérisé en ce que** le corps de support (14) présente une configuration aérodynamique comprenant des bords arrondis.

**5.** Dispositif de mesure (10) selon l'une des revendications 1-4, **caractérisé en ce que** trois conduits d'équilibrage de pression (18) sont connectés au conduit de microphone (16), dans lequel les conduits d'équilibrage de pression (18) sont agencés parallèlement les uns aux autres dans le corps de support (14).

**6.** Dispositif de mesure (10) selon l'une des revendications 1-5, **caractérisé en ce qu'**il est configuré pour prendre des mesures photoacoustiques différentielles et comprend deux corps de support (14), comprenant chacun un conduit de microphone (16) respectif et au moins un conduit d'équilibrage de pression (18), dans lequel un microphone (26) respectif est connecté à chaque conduit de microphone (16).

**7.** Dispositif de mesure (10) selon la revendication 6, **caractérisé en ce que** les deux corps de support (14) sont agencés dans une configuration présentant un angle de 90° ou 180° l'un par rapport à l'autre.

**8.** Dispositif de mesure (10) selon l'une des revendications 1-7, **caractérisé en ce que**

- le résonateur photoacoustique (12) est mis en œuvre en tant que cylindre ouvert aux deux extrémités, auquel le corps de support (14) est fixé dans une direction radiale,
- le conduit de microphone (16) est agencé radialement dans le corps de support (14), et
- le conduit d'équilibrage de pression (18) est agencé perpendiculairement au conduit de microphone (16).

9. Dispositif de mesure (10) selon l'une des revendications 1-8, **caractérisé en ce que** le microphone (26) comprend

- un logement externe,
- une ouverture (42) formée dans le logement externe et connectée au conduit de microphone (16),
- un espace capteur situé à l'intérieur du logement externe et connecté à l'ouverture (42), dans lequel l'espace capteur est partiellement délimité par un diaphragme de microphone (40), et
- un passage d'équilibrage de pression (44) adapté pour interconnecter l'espace capteur avec un reste de l'espace interne du microphone (26).

Fig. 1A

Fig. 1B

Fig. 1C

Fig. 1D

Fig. 2A

Fig. 2B

Fig. 2C

EP 4 222 477 B1

Fig. 3A

Fig. 3B

Fig. 3C

Fig. 3D

Fig. 3E

22

Fig. 4A

Fig. 4B

Fig. 4C

Fig. 5A

Fig. 5B

Fig. 6

Fig. 7

Fig. 8A

Fig. 8B

Fig. 8C

Fig. 8D

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090229345 A1
- US 7765871 B2
- US 20110072886 A1
- US 8115931 B2
- US 8479559 B2
- US 20170038343 A1

**Non-patent literature cited in the description**

- A fully opened photoacoustic resonator based system for fast response gas concentration measurements. *Sensors and Actuators B*, 2010, vol. 147, 206-212